# EUROPÄISCHE PATENTSCHRIFT

(11) **EP 2 663 473 B1**
(45) Veröffentlichungstag und Bekanntmachung des Hinweises auf die Patenterteilung: **15.07.2015**
(21) Anmeldenummer: 11794053.6
(22) Anmeldetag: 08.12.2011
(51) Int. Cl.: B60R 22/34, B60R 22/28

(54) **GURTAUFROLLER MIT EINER GESCHWINDIGKEITSGEREGELTEN KRAFTBEGRENZUNGSEINRICHTUNG**
BELT RETRACTOR WITH A SPEED-CONTROLLED FORCE LIMITING UNIT
ENROULEUR DE CEINTURE COMPORTANT UN APPAREIL DE LIMITATION DE LA FORCE RÉGULÉ PAR LA VITESSE

(30) Priorität: 12.01.2011 DE 102011008405
(43) Veröffentlichungstag der Anmeldung: 20.11.2013
(73) Patentinhaber: Autoliv Development AB, 447 83 Vårgårda (SE)
(72) Erfinder: SINGER, Klaus-Peter, 22399 Hamburg (DE); JABUSCH, Ronald, 25336 Elmshorn (DE)
(74) Vertreter: Müller Verweyen
(86) Internationale Anmeldenummer: PCT/EP2011/006167
(87) Internationale Veröffentlichungsnummer: WO 2012/095133

(56) Entgegenhaltungen:
- EP-A1- 1 069 009
- WO-A1-2010/139433
- DE-A1-102009 010 435

## Beschreibung

Die Erfindung betrifft einen Gurtaufroller mit einer geschwindigkeitsgeregelten Kraftbegrenzungseinrichtung mit den Merkmalen des Oberbegriffs von Anspruch 1.

Aus der auf die Anmelderin zurückgehende WO 2006/108451 A1 ist z.B. eine geschwindigkeitsgeregelte Kraftbegrenzungseinrichtung für einen Gurtaufroller bekannt, welche mehrere an dem Rahmen des Gurtaufrollers angeordnete, in Schwingung zu versetzende Massen aufweist. Die Massen sind drehbar an dem Aufrollerrahmen gelagert und greifen während des kraftbegrenzten Gurtbandauszugs wechselweise mit zwei Zähnen in einen mit der Gurtwelle verbundenen Verzahnungsring ein. Insgesamt ist der Gurtaufroller aufgrund der an dem Aufrollerrahmen angeordneten schwingenden Massen aufwendig in der Herstellung und teuer. Ferner benötigt der Gurtaufroller aufgrund der schwingenden Massen einen verhältnismäßig großen Bauraum.

In der ebenfalls auf die Anmelderin zurückgehenden deutschen Patentanmeldung 10 2008 049 931.5, die den Oberbegriff des Anspruchs 1 offenbart, wird eine weiterentwickelte, auf der Grundlage desselben physikalischen Prinzips arbeitende Kraftbegrenzungseinrichtung beschrieben, bei der zwei verzahnte Teile kraftbegrenzt zueinander bewegt werden und eines der Teile dabei eine wellenförmige Vorschubbewegung ausführt, bei der die Verzahnungen wechselnd in Eingriff und außer Eingriff gelangen. Durch das die wellenförmige Vorschubbewegung ausführende Teil werden die schwingenden Massen ersetzt, so dass die dort beschriebene Kraftbegrenzungseinrichtung einen wesentlich kleineren Bauraum benötigt und einen wesentlich einfacheren Aufbau aufweist. In einem Ausführungsbeispiel ist das die wellenförmige Vorschubbewegung ausführende Teil durch eine Verzahnungsscheibe verwirklicht, die kraftschlüssig mit der Gurtwelle verbunden ist.

Ferner ist aus der DE 10 2009 010 435 A1 ein Gurtaufroller mit einer geschwindigkeitsgeregelten Kraftbegrenzungseinrichtung bekannt, bei dem die Kraftbegrenzungseinrichtung zur Aktivierung mit einem Teil an dem Rahmen des Gurtaufrollers festgelegt ist und mit einem anderen Teil an die Gurtwelle ankoppelbar ist. Das Teil, mit dem die Kraftbegrenzungseinrichtung an die Gurtwelle ankoppelbar ist, ist als drehbarer Zahnring ausgebildet, in den eine an der Gurtwelle gelagerte Sperrklinke einsteuert. Während der kraftbegrenzten Gurtauszugsbewegung wird das Drehmoment von dem Zahnring über axiale Finger in eine verzahnte Schwingscheibe eingeleitet, welche daraufhin zu einer Rotationsbewegung mit einer überlagerten, quer gerichteten Schwingbewegung angetrieben wird, die dabei wechselweise in Eingriff und außer Eingriff mit an dem Rahmen des Gurtaufrollers vorgesehenen Verzahnungen gelangt. Während dieser Rotationsbewegung wird die Schwingscheibe periodisch beschleunigt und abgebremst, wodurch die der Kraftbegrenzung zugrundeliegende Energievernichtung bewirkt wird. Ein Nachteil dieser Ausführungsform ist darin zu sehen, dass der Zahnring bei einer Aktivierung der Blockiereinrichtung eine bestimmte Ausrichtung zu der einsteuernden Sperrklinke aufweisen muss, damit die Sperrklinke nicht auf einer Spitze der Verzahnung des Zahnringes scheinverriegelt. Die Einsteuerbewegung der Sperrklinke muss daher synchronisiert zu der Ausrichtung des Zahnringes erfolgen, was wiederum insofern problematisch sein kann, da der Zahnring selbst in seiner Ausrichtung durch die Montage an dem Aufrollerrahmen festgelegt wird. Damit weist die Ausrichtung des Zahnringes aufgrund von Fertigungstoleranzen des Zahnringes selbst und der Befestigungsstellen an dem Aufrollerrahmen eine gewisse nicht zu vermeidende Toleranz auf, die eine Synchronisierung der Bewegung der Sperrklinke erschwert.

Aufgabe der Erfindung ist es, einen alternativen kostengünstigen und kompakten Gurtaufroller mit einer geschwindigkeitsgeregelten Kraftbegrenzungseinrichtung zu schaffen.

Die Aufgabe wird erfindungsgemäß durch einen Gurtaufroller mit den Merkmalen des Anspruchs 1 gelöst. Weitere bevorzugte Ausführungsformen der Erfindung sind den Unteransprüchen, den Figuren und der zugehörigen Beschreibung zu entnehmen.

Erfindungsgemäß wird zur Lösung der Aufgabe gemäß Anspruch 1 vorgeschlagen, dass die Gurtwelle wenigstens zweiteilig mit einem ersten und einem zweiten Teil ausgebildet ist, und das Gurtband auf dem ersten Teil aufwickelbar ist, und das zweite Teil der Gurtwelle bei einer Ansteuerung der Blockiervorrichtung gegenüber dem Aufrollerrahmen blockierbar ist, und dass die zueinander bewegbaren Teile jeweils unterschiedlichen Teile der Gurtwelle zugeordnet sind, wobei der Aufrollerrahmen U-förmig mit zwei sich gegenüberstehenden Schenkeln ausgebildet ist, und die Kraftbegrenzungseinrichtung zwischen den Schenkeln angeordnet ist. Die Gurtwelle bildet damit mit der Kraftbegrenzungseinrichtung eine kostengünstig zu montierende Einheit, wobei die übrigen Bestandteile des Gurtaufrollers kostengünstig von bisherigen Gurtaufrollern ohne konstruktive Veränderungen übernommen werden können. Aufgrund der zweiteiligen Ausbildung der Gurtwelle und der vorgeschlagenen Zuordnung der Teile der Kraftbegrenzungseinrichtung zu den Teilen der Gurtwelle befindet sich die Kraftbegrenzungseinrichtung bei einem Blockieren der Gurtwelle automatisch im Kraftfluss zwischen dem Gurtband und dem fahrzeugfesten Aufrollerrahmen, so dass sie beim Überschreiten einer vorbestimmten Gurtauszugkraft automatisch aktiviert wird, und die Gurtauszugsbewegung nachfolgend durch die geschwindigkeitsgeregelte Kraftbegrenzungseinrichtung gesteuert wird. Ferner können die Teile der Kraftbegrenzungseinrichtung in einer beliebigen Ausrichtung zueinander und zu den Teilen der Gurtwelle einschließlich der Blockiereinrichtung angeordnet werden, ohne dass dadurch Nachteile für eine möglicherweise erforderliche Synchronisation der Einsteuerbewegung der Sperrklinke entstehen können. Ferner ergibt sich aus der Anordnung der Kraftbegrenzungseinrichtung zwischen den Schenkeln und der Vorteil, dass die Kräfte in der Kraftbegrenzungseinrichtung zwischen den Schenkeln entstehen und wirken, so dass die Gurtwelle mit der daran angeordneten Kraftbegrenzungseinrichtung mechanisch besonders gut unterstützt wird. Außerdem kann durch die vorgeschlagene Anordnung der Kraftbegrenzungseinrichtung der Lagerabstand zwischen den Lagerstellen der Gurtwelle möglichst groß bemessen werden, so dass die Gurtwelle auch im Normalgebrauch sehr stabil bei einer kompakten Bauform des Gurtaufrollers gelagert ist.

Die Erfindung wird im Folgenden anhand bevorzugter Ausführungsformen unter Bezugnahme auf die beigefügten Figuren erläutert. Dabei zeigt:
- Fig.1:: Gurtaufroller mit Gurtstraffer;
- Fig.2:: Gurtwelle mit Kraftbegrenzungseinrichtung;
- Fig.3:: zweiteilige Gurtwelle mit Kraftbegrenzungseinrichtung in Explosionsdarstellung in einer ersten Ansicht;
- Fig.4:: zweiteilige Gurtwelle mit Kraftbegrenzungseinrichtung in Explosionsdarstellung in einer zweiten Ansicht;
- Fig.5:: zweiteilige Gurtwelle mit Kraftbegrenzungseinrichtung in Einzelteilen;
- Fig.6:: Gurtaufroller mit einer Kraftbegrenzungseinrichtung in einer ersten Ausführungsform in Schnittdarstellung;
- Fig.7:: Alternative Kraftbegrenzungseinrichtung vor der Montage in Explosionsdarstellung;
- Fig.8:: Aufrollerrahmen mit dem daran angeordneten Teil der Gurtwelle mit der Kraftbegrenzungseinrichtung;
- Fig.9:: Aufrollerrahmen aus Fig.8 mit einem seitlich eingeführten zweiten Teil der Gurtwelle;
- Fig.10:: Gurtaufroller mit einer Kraftbegrenzungseinrichtung in einer zweiten Ausführungsform in Schnittdarstellung;
- Fig. 11:: Aufrollerrahmen mit angeprägter Axialverzahnung in einer ersten Ansicht; und
- Fig. 12:: Aufrollerrahmen mit angeprägter Axialverzahnung in einer zweiten Ansicht.

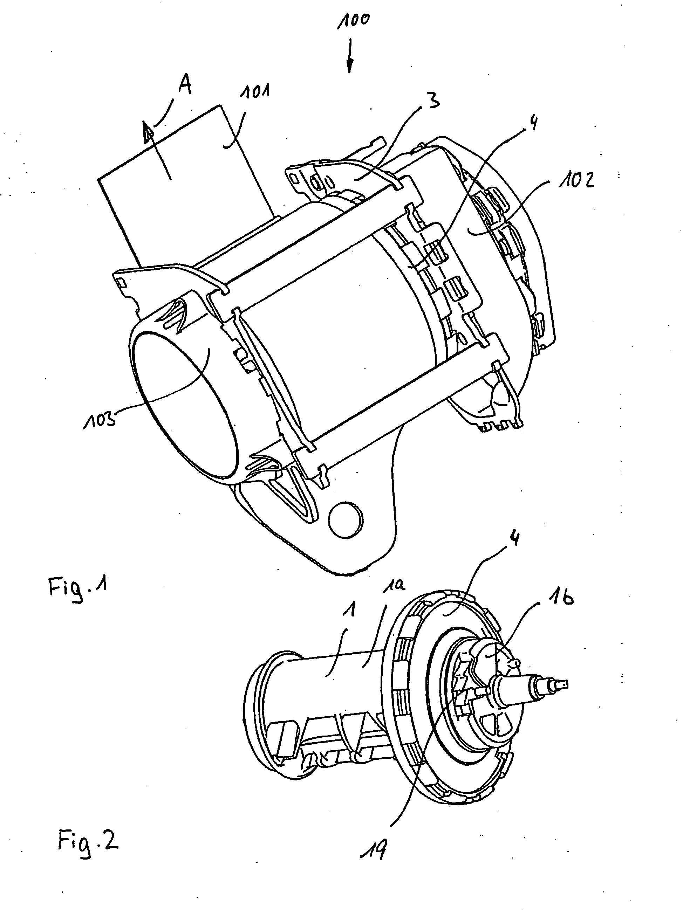

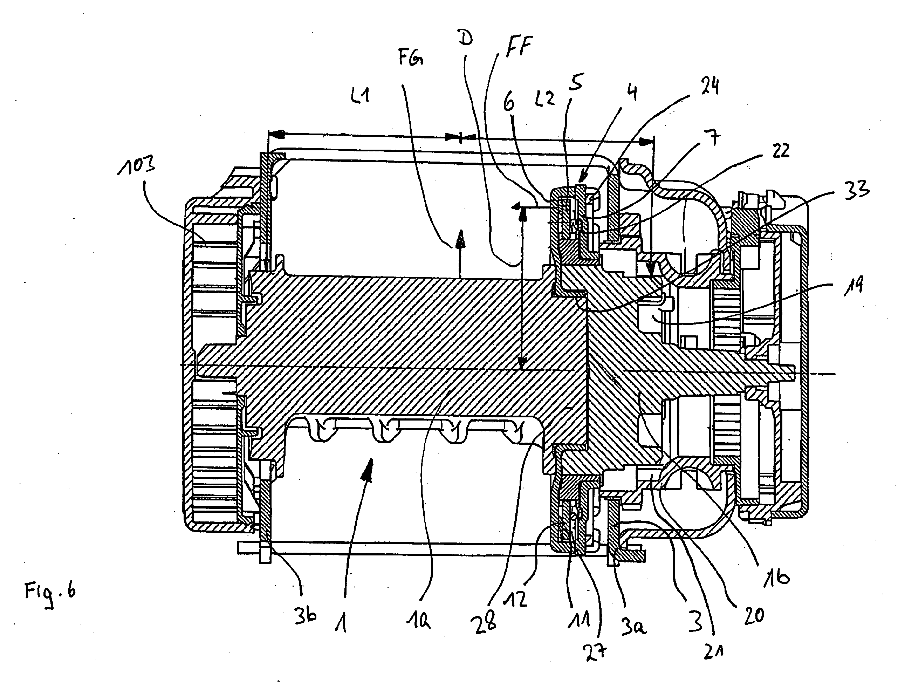

In Fig.1 ist ein erfindungsgemäßer Gurtaufroller 100 mit einem Aufrollerrahmen 3, einem seitlich an dem Aufrollerrahmen 3 angeordneten Gurtstraffer 102 und einer auf der gegenüberliegenden Seite des Aufrollerrahmens 3 angeordneten Wickelfederkassette zu erkennen. Der Aufrollerrahmen 3 ist, wie auch in der Figur 6 zu erkennen ist, U-förmig mit zwei gegenüberliegenden Schenkeln 3a und 3b ausgebildet und dient sowohl zur Befestigung des Gurtaufrollers 100 an einem Fahrzeug als auch zur Lagerung einer in diesem Fall zweiteiligen Gurtwelle 1.

Die Gurtwelle 1 ist zweiteilig mit einem ersten Teil la und einem zweiten Teil 1b ausgebildet, welche über eine geschwindigkeitsgeregelte Kraftbegrenzungseinrichtung 4 miteinander verbunden sind. Auf dem ersten Teil 1a der Gurtwelle 1 ist ein Gurtband 101 aufgewickelt, welches gegen die Federkraft der in der Federkassette 103 angeordneten Wickelfeder in Pfeilrichtung A ausziehbar ist. Das zweite Teil 1b der Gurtwelle 1 ist über eine Blockiereinrichtung 19 in Form einer Sperrklinke bei einem Überschreiten einer vorbestimmten Gurtbandauszugsbeschleunigung oder Fahrzeugverzögerung gegenüber dem Aufrollerrahmen 3 und damit auch gegenüber dem Fahrzeug verriegelbar, so dass der Gurtbandauszug nachfolgend nur unter Aktivierung der Kraftbegrenzungseinrichtung 4 möglich ist.

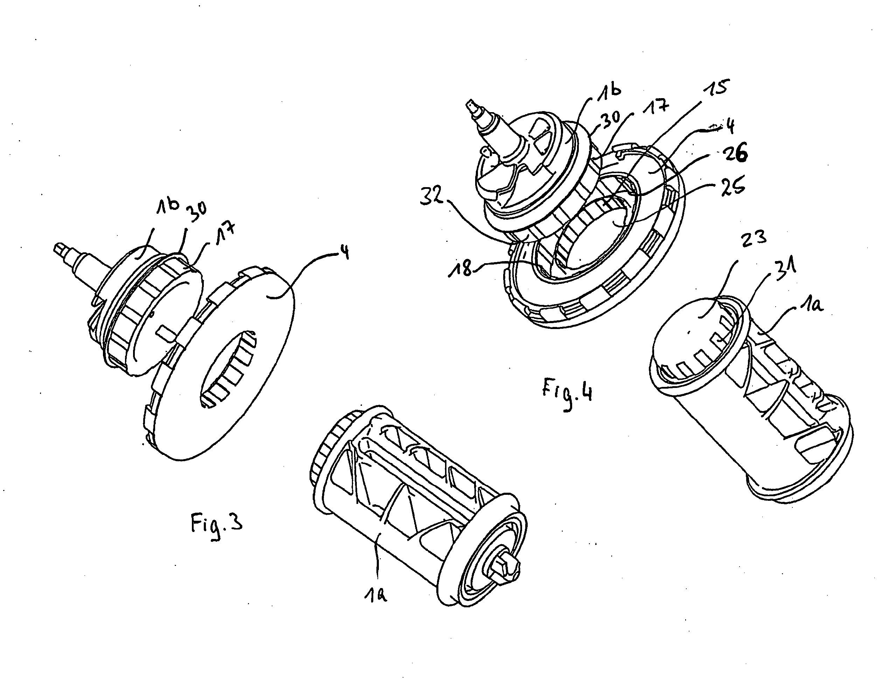

Die Kraftbegrenzungseinrichtung 4 ist als vormontierte Baugruppe mit einer ersten zentralen ringförmigen Öffnung 25 und einer zu dieser konzentrisch angeordneten zweiten ringförmigen Öffnung 26 mit einem größeren Durchmesser ausgebildet, wobei sowohl die erste als auch die zweite Öffnung 25 und 26 mit einer Profilierung 15 und 18 versehen sind, wie in der Fig. 4 zu erkennen ist.

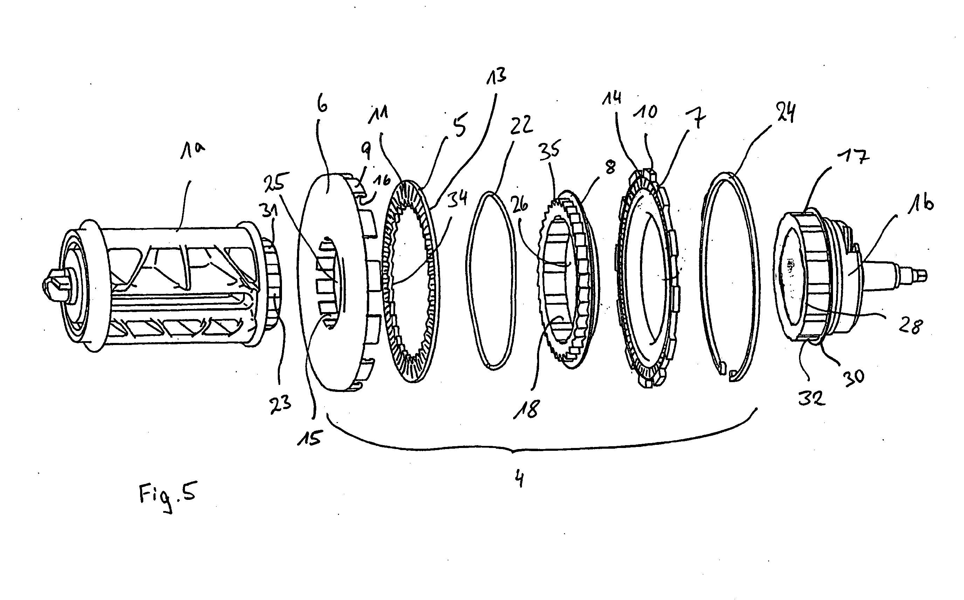

Das erste Teil 1a der Gurtwelle 1 ist zum Aufwickeln des Gurtbandes 101 vorgesehen und weist einen axial gerichteten zylindrischen Fortsatz 23 auf, der ebenfalls mit einer Profilierung 31 versehen ist. Das zweite Teil 1b der Gurtwelle 1 weist einen ringzylindrischen Fortsatz 17 mit einer äußeren Profilierung 32 auf, an dem radial innen eine Ausnehmung 28 vorgesehen ist, welche geringfügig größer als der Fortsatz 23 an dem ersten Teil 1b der Gurtwelle 1 bemessen ist(siehe Fig.5). Die Profilierungen 31 und 15 und 32 und 18 sind paarweise identisch geformt, und können bevorzugt als Vielzahnprofile ausgebildet sein.

Die Kraftbegrenzungseinrichtung 4 selbst umfasst ein erstes Teil 6 in Form einer ringförmigen Scheibe, welche an ihrem äußeren Rand mit axial gerichteten Ansätzen 9 und an ihrer zentralen Öffnung 25 mit einem ringförmigen Flansch 33 versehen ist. Das Teil 6 ist bevorzugt in einem spanlosen Umformverfahren, wie z.B. Stanzverfahren, hergestellt, bei dem sowohl die Ansätze 9 und der Flansch 33 einschließlich der daran vorgesehenen Profilierung 15 mit hergestellt werden können. Ferner umfasst die Kraftbegrenzungseinrichtung 4 ein zweites Teil 7, welches ebenfalls als ringförmige Scheibe mit einer zentralen Öffnung ausgebildet ist und an seinem äußeren Rand mehrere regelmäßig und beabstandet angeordnete radiale Fortsätze 10 aufweist. Die radialen Fortsätze 10 sind in der Breite und in den Abständen derart bemessen, dass sie genau zwischen die axial gerichteten Ansätze 9 des Teils 6 passen.

Weiterhin umfasst die Kraftbegrenzungseinrichtung 4 ein Teil 5 in Form einer Ringscheibe mit zwei axial gerichteten Verzahnungen 11 und 13 und einer radial nach innen gerichteten Verzahnung 34. Die Verzahnung 11 ist derart geformt, dass sie in Eingriff mit einer gegenüberliegenden, an dem Teil 6 vorgesehenen Verzahnung 12 gelangt, welche in der Fig.6 zu erkennen ist. Ferner ist ein Mitnehmer 8 vorgesehen, welcher radial innen die zentrale Öffnung 26 größeren Durchmessers mit der Profilierung 18 bildet, und außen mit einer Verzahnung 35 versehen ist. Als weitere Teile umfasst die Kraftbegrenzungseinrichtung 4 noch einen wellenförmigen Federring 22 und einen Sicherungsring 24.

Die Kraftbegrenzungseinrichtung 4 wird in einem Vormontageschritt als Baugruppe folgendermaßen zusammengesetzt. Zuerst werden das Teil 5, der Federring 22 und der Mitnehmer 8 in dieser Reihenfolge in das Teil 6 eingelegt, wobei der Mitnehmer 8 mit der Verzahnung 35 zu einer drehfesten Verbindung mit dem Teil 5 in die Verzahnung 34 zusammengefügt wird. Anschließend wird das Teil 7 mit den radialen Fortsätzen 10 zu einer drehfesten Verbindung mit dem Teil 6 zwischen die Ansätze 9 eingeschoben und schließlich durch den Sicherungsring 24 gesichert, welcher dazu in entsprechende radial innen liegende Nuten 16 an den Ansätzen 9 eingreift. Der Federring 22 stützt sich dadurch an einer Seite an dem Teil 7 ab und drängt das Teil 5 gegen das Teil 6, so dass sich die Verzahnungen 11 und 12 vor Aktivierung der Kraftbegrenzungseinrichtung 4 im Eingriff befinden.

Die derart vormontierte Kraftbegrenzungseinrichtung 4 ist in den Figuren 3 und 4 aus verschiedenen Blickrichtungen zusammen mit dem ersten und dem zweiten Teil 1a und 1b der Gurtwelle 1 zu erkennen.

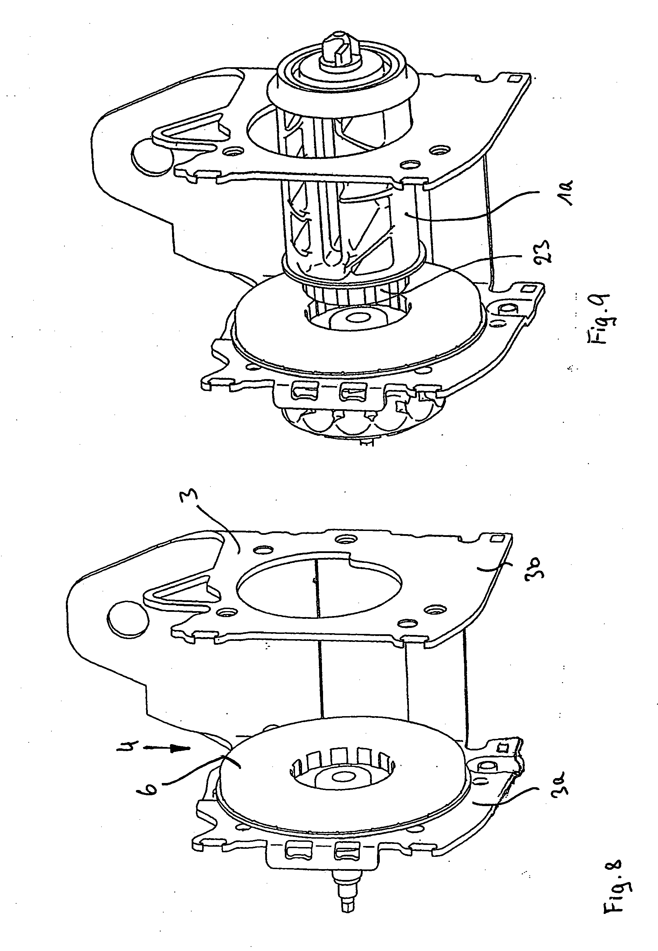

Bei der Montage des Gurtaufrollers 100 wird die Kraftbegrenzungseinrichtung 4 mit der Öffnung 26 des Mitnehmers 8 auf den Fortsatz 17 des zweiten Teils 1b der Gurtwelle 1 aufgeschoben, wodurch die Profilierungen 18 und 32 in Eingriff gelangen und eine drehfeste Verbindung zwischen dem zweiten Teil 1b der Gurtwelle 1, dem Mitnehmer 8 und dem Teil 5 hergestellt wird. Zur Begrenzung der Aufschiebebewegung der Kraftbegrenzungseinrichtung 4 ist der Fortsatz 17 durch einen Anschlag 30 begrenzt, an der der Mitnehmer 8 und das Teil 7 in der Endstellung mit ihren Stirnseiten zur Anlage gelangen. Die Einheit aus dem zweiten Teil 1b der Gurtwelle 1 und der Kraftbegrenzungseinrichtung 4 wird dann in eine Öffnung des Schenkels 3a des Aufrollerrahmens 3 eingeschoben, wie in der Fig.8 zu erkennen ist. Anschließend wird das zweite Teil 1a der Gurtwelle 1 durch eine zweite in dem Schenkel 3b vorgesehene Öffnung eingeschoben und mit dem Fortsatz 23 in der Öffnung 25 des Teils 6 verpresst, wodurch die ineinandergreifenden Profilierungen 31 und 15 anschließend eine drehfeste Verbindung zwischen dem Teil 6 und dem Teil 1b der Gurtwelle 1 bilden, und die Kraftbegrenzungseinrichtung 4 anschließend zwischen den Schenkeln 3a und 3b des Aufrollerrahmens 3 angeordnet ist.

Die Ausnehmung 28 in dem zweiten Teil 1b der Gurtwelle 1 ist größer dimensioniert als der Fortsatz 23 an dem ersten Teil 1a, so dass zwischen dem Fortsatz 23 und der Innenwandung der Ausnehmung 28 ein Spalt vorhanden ist, in dem der Flansch 33 des Teils 6 angeordnet ist. Beim Verpressen des ersten Teils 1a der Gurtwelle 1 kann die Innenwandung der Ausnehmung 28 als Gegenlager wirken, so dass die Profilierungen 31 und 15 in jedem Fall formschlüssig in Eingriff gedrängt werden.

Nach dem Verpressen des ersten Teils 1a der Gurtwelle 1 bilden das erste Teil 1a zusammen mit den Teilen 6 und 7 und das zweite Teil 1b zusammen mit dem Mitnehmer 8 und dem Teil 5 einen drehfesten Verbund. Für den Fall, dass das zweite Teil 1b der Gurtwelle 1 bei einer Ansteuerung der Blockiereinrichtung 19 fahrzeugfest blockiert wird, kann der Mitnehmer 8 und das Teil 5 aufgrund der drehfesten Verbindung demnach auch als fahrzeugfest blockiert angesehen werden. Übersteigt die Gurtauszugskraft bei blockiertem zweiten Teil 1b einen durch die Kraftbegrenzungseinrichtung 4 bestimmten Schwellwert, so kann das erste Teil 1a der Gurtwelle 1 in Auszugsrichtung drehen, indem das Teil 6 gegenüber dem Teil 5 dreht, wobei das Teil 5 dabei die Kraft begrenzende, wellenförmige Schwingbewegung ausführt, während der die Verzahnungen 11 und 12 und 13 und 14 paarweise wechselnd in Eingriff und außer Eingriff gelangen. Die Teile 5 und 6 bzw. 7 führen dadurch eine Relativbewegung zueinander aus, während der die Teile 5, 6 und 7 wechselweise abgebremst und beschleunigt werden. Die Teile 6 und 7 führen dabei eine reine Rotationsbewegung aus, die durch die zu der Rotationsbewegung quer gerichtete Schwingbewegung des Teils 5 gesteuert wird. Das Teil 5 ist dazu mit der Verzahnung 34 auf der Verzahnung 35 des Mitnehmers 8 geringfügig quer verschieblich angeordnet, so dass es die quer gerichtete Schwingbewegung ausführen kann.

Die Kraftbegrenzungseinrichtung 4 und insbesondere der Eingriffsbereich der Verzahnungen 11 und 12 und 13 und 14 und das Teil 5 selbst sind im Überlappungsbereich der beiden Teile 1a und 1b, gebildet durch den die Ausnehmung 28 eingreifenden Fortsatz 23, angeordnet, so dass die Kraftbegrenzungseinrichtung 4 und insbesondere die Teile 5, 6 und 7 auch bei den wirkenden Kräften mechanisch ausreichend unterstützt werden und ihre relative Lage zueinander auch während der Aktivierung der Kraftbegrenzungseinrichtung 4 beibehalten wird. Da die fest miteinander verbundenen Teile 6 und 7 den Hohlraum bilden, in dem das Teil 5 die Schwingbewegung ausführt, und außerdem einen festen Verbund bilden, welcher zur Abstützung des Federringes 22 einerseits und zur Aufnahme der in den Verzahnungen 11 und 12 wirkenden Axialkräfte dient, werden die zwischen den Teilen 1a und 1b der Gurtwelle 1 wirkenden Axialkräfte wesentlich reduziert, so dass die Gurtwelle 1 selbst auch bei einer aktivierten Kraftbegrenzungseinrichtung 4 formstabil ist, und die Teile 1a und 1b nicht auseinandergetrieben werden.

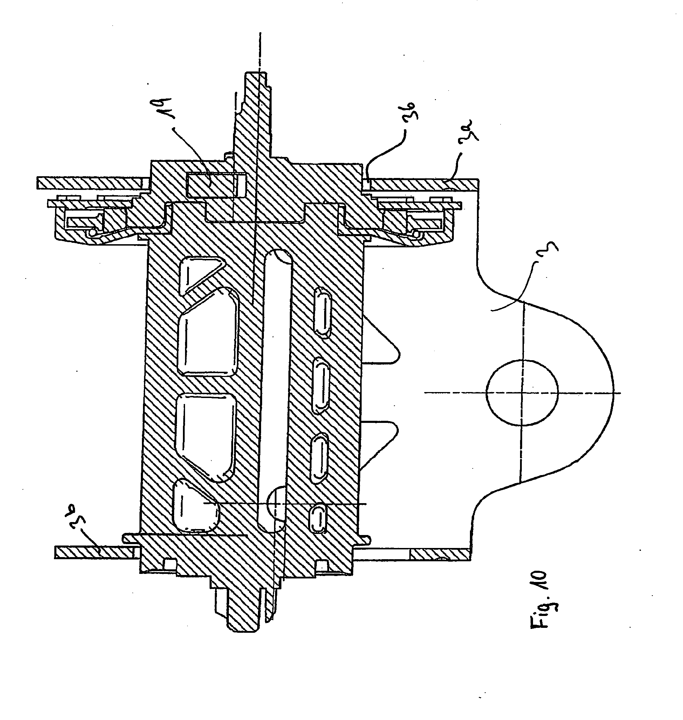

Die Blockierung des zweiten Teils 1b der Gurtwelle 1 erfolgt in dem Ausführungsbeispiel in Fig.6 durch den Eingriff der Blockiereinrichtung 19 in eine Innenverzahnung 21 eines in Gurtauszugsrichtung an dem Aufrollerrahmen 3 festgelegten Strafferantriebsrades 20. In der Fig.10 ist eine alternative Ausführungsform der Erfindung zu erkennen, bei der die Blockiereinrichtung 19 direkt in eine Verzahnung 36 einer Öffnung eines Schenkels 3a des Aufrollerrahmens 3 blockiert.

Der Federring 22 ist bevorzugt derart bemessen, dass er eine Federkraft FF auf die im Eingriff befindlichen Teile 5 und 6 ausübt, welche im Produkt mit dem Abstand D der Kraftwirkungslinie von der Drehachse des Gurtaufrollers 1 (FF x D) größer ist, als das Produkt aus der maximalen resultierenden Gurtauszugskraft FG mit dem Abstand L1, L2 zu den Lagerstellen der Gurtwelle 1 (FG x L1). Die Wirkungslinie der resultierenden Gurtauszugskraft FG wird dabei mittig zu den Abständen der Lagerstellen angenommen, so dass L1 gleich L2 ist. Durch die vorgeschlagene Bemessung des Federringes 22 kann das Durchbiegen der Gurtwelle 1 bzw. das gegeneinander Verkippen der Teile 1a und 1b der Gurtwelle 1 vermindert oder sogar gänzlich vermieden werden.

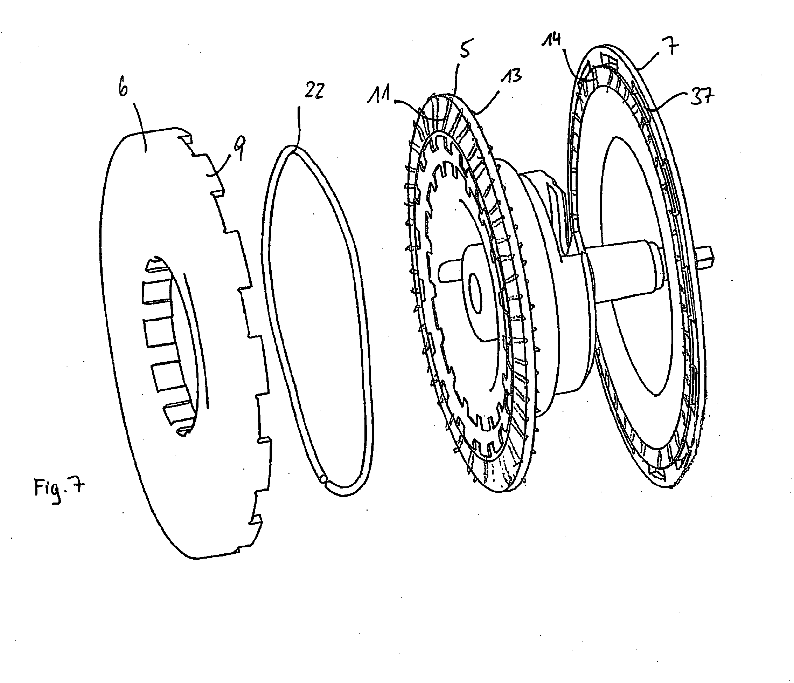

In der Fig.7 ist eine etwas abgewandelte Ausführungsform der Erfindung zu erkennen, bei der das Teil 7 Fenster 37 aufweist, mit denen das Teil 7 auf die Ansätze 9 des Teils 6 aufgeschoben wird.

Wichtig für den erfindungsgemäßen Erfolg ist es dabei, dass das Teil 5, welches die zu der Rotationsbewegung der Teile 6 und 7 und zur Drehbewegung des ersten Teils 1a der Gurtwelle 1 quer gerichtete Schwingbewegung ausführt, und die Teile 6 und 7, die die Rotationsbewegung ohne eine Querbewegung ausführen, jeweils unterschiedlichen Teilen 1a und 1b der Gurtwelle 1 zugeordnet sind, welche eben gerade die Kraft begrenzte Bewegung zueinander ausführen sollen. Dadurch wirkt die Kraftbegrenzungseinrichtung 4 unmittelbar in dem Kraftfluss zwischen den Teilen 1a und 1b der Gurtwelle 1, und die übrigen Teile des Gurtaufrollers 100 können unverändert von einem herkömmlichen Gurtaufroller übernommen werden. Insbesondere kann die Blockiereinrichtung 19 nach dem herkömmlichen Prinzip in eine gehäusefeste Verzahnung blockieren, so dass durch die vorgeschlagene Anordnung der Kraftbegrenzungseinrichtung 4 Probleme hinsichtlich der Synchronisation der Blockiereinrichtung 19 nicht auftreten können.

Da die Kraftbegrenzungseinrichtung 4 als vormontierte Baugruppe beim Zusammenbau des Gurtaufrollers 100 montierbar ist, kann diese als Einheit in einer externen Fertigungsstätte vormontiert und als Baugruppe bereits angeliefert werden. Ferner kann durch die vormontierte Kraftbegrenzungseinrichtung 4 der Montageprozess als solches vereinfacht werden, da während des Montageprozesses des Gurtaufrollers 100 nicht mehr die Einzelteile der Kraftbegrenzungseinrichtung 4 gehändelt werden müssen. Außerdem kann die Funktionsfähigkeit und die Kraftbegrenzungscharakteristik der Kraftbegrenzungseinrichtung 4 vor der Montage an dem Gurtaufroller 100 in einer externen Prüfvorrichtung wenigstens stichprobenartig geprüft werden.

Ferner ergibt sich aus der Anordnung der Kraftbegrenzungseinrichtung 4 zwischen den Schenkeln 3a und 3b der Vorteil, dass die Kräfte in der Kraftbegrenzungseinrichtung 4 zwischen den Schenkeln 3a und 3b entstehen und wirken, so dass die Gurtwelle 1 mit der daran angeordneten Kraftbegrenzungseinrichtung 4 mechanisch besonders gut unterstützt werden. Außerdem kann durch die vorgeschlagene Anordnung der Kraftbegrenzungseinrichtung 4 der Lagerabstand zwischen den Lagerstellen der Gurtwelle 1 möglichst groß bemessen werden, so dass die Gurtwelle 1 auch im Normalgebrauch sehr stabil bei einer kompakten Bauform des Gurtaufrollers 100 gelagert ist.

Ferner kann durch die Ausbildung einer zentralen Öffnung 25 in der Kraftbegrenzungseinrichtung 4, mit der diese koaxial zu den beiden Teilen 1a und 1b der Gurtwelle 1 angeordnet ist, eine kompakte Bauform des Gurtaufrollers 100 erzielt werden, wobei die in die Öffnung 25 ragenden Teile 1a und 1b der Gurtwelle 1 dadurch zusätzlich mechanisch in ihrem Verbund stabil zusammengehalten werden. Da die Kraftbegrenzungseinrichtung 4 die Gurtwelle 1 radial außen umfasst, kann der Durchmesser im Vergleich zu herkömmlichen Gurtwellen bedarfsweise zusätzlich weiter verkleinert werden.

Die Kraftbegrenzungseinrichtung 4 kann durch die beiden konzentrischen Öffnungen 25 und 26 außerdem sehr einfach und kompakt an die beiden Teile 1a und 1b der Gurtwelle 1 angekoppelt werden. Außerdem kann die Kraftbegrenzungseinrichtung 4 durch die konzentrische Anordnung der Öffnungen 25 und 26 und der Teile 5, 6 und 7 auch konzentrisch zu der Drehachse der Gurtwelle 1 und der Drehachse des die Kraft begrenzte Drehbewegung ausführenden ersten Teils 1a angeordnet werden, so dass die Drehbewegung des ersten Teils 1a unmittelbar durch die Kraftbegrenzungseinrichtung 4 gedämpft werden kann, ohne dass weitere Teile zur Übertragung des Bewegungsablaufs erforderlich sind.

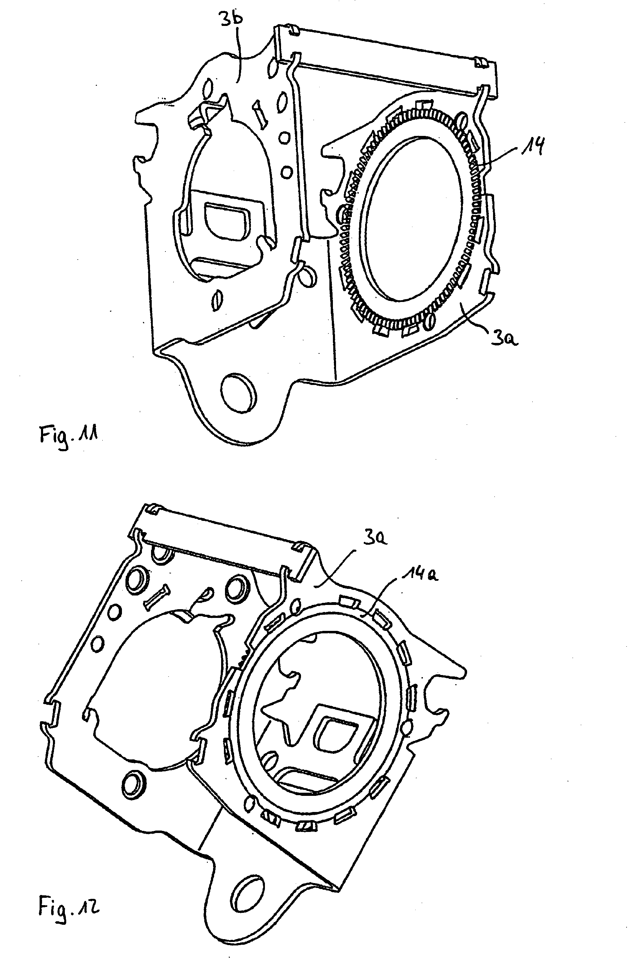

In den Figuren 11 und 12 ist ein weiteres bevorzugtes Ausführungsbeispiel der Erfindung zu erkennen, bei dem die Verzahnung 14 integraler Bestandteil des Schenkels 3a ist, also als einstückig mit dem Schenkel 3a ausgebildet anzusehen ist. Dies kann z.B. in Form eines Extrateils verwirklicht sein, welches an dem Schenkel 3a verklebt oder verpresst ist, so dass das Extrateil eine feste Einheit mit dem Schenkel 3a bildet.

Alternativ kann die Verzahnung 14 auch, wie dies in dem gezeigten Ausführungsbeispiel der Fall ist, durch eine Verprägung, d.h. durch regelmäßig und äquidistant angeordnete Vertiefungen, gebildet sein, welche in den Schenkel 3a rolliert oder durch eine Prägung eingebracht sind.

Ferner kann die Verzahnung 14 auch durchgeprägt, d.h. in Form von regelmäßig und äquidistant angeordneten Ausnehmungen, verwirklicht sein, welche z.B. beim Stanzen mit hergestellt werden können.

Der Vorteil dieser vorgeschlagenen Ausführungsform ist darin zu sehen, dass die Teileanzahl verringert wird, so dass die Herstellkosten insgesamt verringert werden können. Ferner ermöglicht diese Ausführungsform eine flachere Bauweise des Schenkels 3a mit der Verzahnung 14, wodurch die Steifigkeit des Gurtaufrollers verbessert wird und die Wandstärke des Schenkels 3a geringer bemessen werden kann. Insgesamt wird der Gurtaufroller damit leichter und kostengünstiger.

## Patentansprüche

1. Gurtaufroller (100) mit einer geschwindigkeitsgeregelten Kraftbegrenzungseinrichtung (4) zur Ermöglichung eines kraftbegrenzten Auszuges eines Gurtbandes (101) mit
- einer in einem Aufrollerrahmen (3) drehbar gelagerten Gurtwelle (1),
- einer Blockiervorrichtung zum Blockieren der Gurtwelle (1) bei Überschreiten eines vorgegebenen Wertes der Gurtbandauszugsbeschleunigung und/oder der Fahrzeugverzögerung gegenüber dem Aufrollerrahmen (3) in Gurtauszugsrichtung,
- wenigstens zwei bei Aktivierung der Kraftbegrenzungseinrichtung (4) relativ zueinander bewegten Teilen (5,6,7), wobei eines der Teile (5) eine Schwingbewegung ausführt, wobei
- beide Teile (5,6,7) Verzahnungen (11,12,13,14) aufweisen, mit denen sie während der Relativbewegung wechselweise in Eingriff und außer Eingriff gelangen, wobei
- die Gurtwelle (1) wenigstens zweiteilig mit einem ersten und einem zweiten Teil (1a,1b) ausgebildet ist,
- das Gurtband (101) auf dem ersten Teil (1a) aufwickelbar ist, und das zweite Teil (1b) der Gurtwelle (1) bei einer Ansteuerung der Blockiervorrichtung gegenüber dem Aufrollerrahmen (3) blockierbar ist, und
- dass die zueinander bewegbaren Teile (5,6,7) jeweils unterschiedlichen Teilen (1a, 1b) der Gurtwelle (1) zugeordnet sind, **dadurch gekennzeichnet, dass**
- der Aufrollerrahmen (3) U-förmig mit zwei sich gegenüberstehenden Schenkeln (3a,3b) ausgebildet ist, und die Kraftbegrenzungseinrichtung zwischen den Schenkeln (3a,3b) angeordnet ist.

2. Gurtaufroller nach Anspruch 1, **dadurch gekennzeichnet, dass** wenigstens eine der Verzahnungen (14) an einem der Schenkel (3a,3b) angeordnet ist.

3. Gurtaufroller nach Anspruch 2, **dadurch gekennzeichnet, dass** die Verzahnung (14) an einem Extrateil angeordnet ist, welches in den Schenkel (3a) eingepresst oder verklebt ist, oder als Extrateil gesintert und formschlüssig an dem Schenkel (3a) verklebt ist.

4. Gurtaufroller nach Anspruch 2, **dadurch gekennzeichnet, dass** die Verzahnung (14) durch eine Verprägung an dem Schenkel (3a) gebildet ist.

5. Gurtaufroller nach Anspruch 2, **dadurch gekennzeichnet, dass** die Verzahnung (14) durch äquidistant angeordnete Ausnehmungen gebildet ist.

6. Gurtaufroller (100) nach einem der vorangegangenen Ansprüche, **dadurch gekennzeichnet, dass** die Kraftbegrenzungseinrichtung (4) ringförmig mit einer zentralen Öffnung (25) ausgebildet und koaxial zu den beiden Teilen (1a, 1b) der Gurtwelle (1) angeordnet ist.

7. Gurtaufroller (100) nach einem der vorangegangenen Ansprüche, **dadurch gekennzeichnet, dass** sich die beiden Teile (1a, 1b) der Gurtwelle (1) in Richtung der Drehachse der Gurtwelle (1) abschnittsweise überlappen, und die Kraftbegrenzungseinrichtung (4) in einem durch die Überlappung der beiden Teile (1a, 1b) definierten Abschnitt angeordnet ist.

8. Gurtaufroller (100) nach einem der vorangegangenen Ansprüche, **dadurch gekennzeichnet, dass** sich die beiden Teile (1a, 1b) der Gurtwelle (1) in Richtung der Drehachse der Gurtwelle (1) abschnittsweise überlappen, und dass ein Teil (6) der Kraftbegrenzungseinrichtung (4) mit einem Abschnitt in einen zwischen den sich überlappenden Abschnitten der Teile (1a, 1b) geschaffenen Freiraum hineinragt, und in dem Bereich der Überlappung an einem der Teile (1a, 1b) der Gurtwelle (1) in Zugrichtung des Gurtbandes (101) drehfest angeordnet ist.

9. Gurtaufroller (100) nach einem der vorangegangenen Ansprüche, **dadurch gekennzeichnet, dass** zwischen den zueinander bewegbaren Teilen (5,6,7) eine Feder (22) vorgesehen ist, welche derart bemessen ist, dass die Teile (5,6,7) durch die Feder (22) im Eingriffsbereich mit einer Federkraft (FF) vorgespannt sind, welche im Produkt mit dem Abstand (D) zu der Drehachse der Gurtwelle (1) ein größeres Drehmoment ausübt als die resultierende, über das Gurtband (101) ausgeübte Zugkraft (FG) im Produkt mit dem Abstand (L1, L2) zu der Lagerung der Gurtwelle (1).

10. Gurtaufroller (100) nach einem der vorangegangenen Ansprüche, **dadurch gekennzeichnet, dass** die Kraftbegrenzungseinrichtung (4) als vormontierte Baugruppe an dem Gurtaufroller (100) befestigbar ist.

11. Gurtaufroller (100) nach einem der vorangegangenen Ansprüche, **dadurch gekennzeichnet, dass** die Kraftbegrenzungseinrichtung (4) eine erste und eine zweite Öffnung (25,26) aufweist, mit der die Kraftbegrenzungseinrichtung (4) jeweils auf einem Teil (1a, 1b) der Gurtwelle (1) drehfest festlegbar ist.

12. Gurtaufroller (100) nach Anspruch 11, **dadurch gekennzeichnet, dass** die Öffnungen (25,26) kreisförmig ausgebildet und konzentrisch zueinander angeordnet sind.

13. Gurtaufroller (100) nach einem der vorangegangenen Ansprüchen, **dadurch gekennzeichnet, dass** die zueinander bewegbaren Teile (5,6,7) der Kraftbegrenzungseinrichtung (4) durch zwei eine feste Einheit bildende, einen Hohlraum (27) zwischen sich einschließende Scheiben und eine in dem Hohlraum (27) angeordnete zu den ersten zwei Scheiben bewegbare dritte Scheibe gebildet sind.

14. Gurtaufroller (100) nach Anspruch 13, **dadurch gekennzeichnet, dass** der Hohlraum (27) dadurch gebildet ist, indem eine erste Scheibe an ihrem äußeren Rand mit einem oder mehreren axial gerichteten Ansätzen (9) versehen ist, und eine zweite Scheibe mit einem oder mehreren radialen Fortsätzen (10) versehen ist, mit denen sie in paralleler und beabstandeter Anordnung zu der ersten Scheibe an den axial gerichteten Ansätzen (9) drehfest festgelegt ist.

15. Gurtaufroller (100) nach einem der vorangegangenen Ansprüche, **dadurch gekennzeichnet, dass** ein Teil (1a) der Gurtwelle (1) mit einem Fortsatz (23) in eine Ausnehmung (28) des jeweils anderen Teils (1b) der Gurtwelle (1) eingreift, und der Fortsatz (23) kleiner als die Ausnehmung (28) bemessen ist, so dass zwischen den Teilen (1a, 1b) der Gurtwelle (1) ein Spalt gebildet ist, in den ein Teil (6,7) der Kraftbegrenzungseinrichtung (4) hineinragt, welches auf dem Fortsatz (23) drehfest festgelegt ist.

## Claims

1. A belt retractor (100) including a speed-regulated force-limiting device (4) for enabling a force-limited extension of a seat belt strap (101) including
- a belt shaft (1) rotatably supported in a retractor frame (3),
- a locking device for locking the belt shaft (1) upon exceeding of a prespecified value of the belt extension acceleration and/or the vehicle deceleration with respect to the retractor frame (3) in the belt extension direction,
- at least two parts (5, 6, 7) which are moved relative to one another upon activation of the force limiting device (4), wherein one of the parts (5) performs a pivoting movement,
wherein
- both parts (5, 6, 7) include gearings (11, 12, 13, 14), using which they alternatingly enter and exit engagement during the relative movement, wherein
- the belt shaft (1) is configured at least two-part with a first and a second part (1a, 1 b),
- the seat belt strap (101) is windable onto the first part (1a), and the second part (1 b) of the belt shaft (1) is lockable with respect to the retractor frame (3) upon a controlling of the locking device, and
- the parts (5, 6, 7) movable with respect to one another are each associated with different parts (1a, 1b) of the belt shaft (1), **characterised in that**
- the retractor frame (3) is configured U-shaped with two opposing arms (3a, 3b), and the force limiting device is disposed between the arms (3a, 3b).

2. The belt retractor according to claim 1, **characterised in that** at least one of the gearings (14) is disposed on one of the arms (3a, 3b).

3. The belt retractor according to claim 2, **characterised in that** the gearing (14) is disposed on an extra part, which is pressed into or adhered to the arm (3a), or is sintered as an extra part and adhered with interference fit on the arm (3a).

4. The belt retractor according to claim 2, **characterised in that** the gearing (14) is formed by an embossing on the arm (3a).

5. The belt retractor according to claim 2, **characterised in that** the gearing (14) is formed by equidistantly disposed recesses.

6. The belt retractor (100) according to one of the preceding claims, **characterised in that** the force-limiting device (4) is configured annular with a central opening (25) and disposed coaxial to the two parts (1 a, 1 b) of the belt shaft (1).

7. The belt retractor (100) according to one of the preceding claims, **characterised in that** the two parts (1 a, 1 b) of the belt shaft (1) sectionally overlap in the direction of the axis of rotation of the belt shaft (1), and the force-limiting device (4) is disposed in a section defined by the overlapping of the two parts (1 a, 1 b).

8. The belt retractor (100) according to one of the preceding claims, **characterised in that** the two parts (1 a, 1 b) of the belt shaft (1) sectionally overlap in the direction of the axis of rotation of the belt shaft (1), and **in that** a part (6) of the force-limiting device (4) protrudes with a section into a free space provided between the overlapping sections of the parts (1a, 1 b), and is disposed for conjoint rotation on one of the parts (1a, 1b), of the belt shaft (1) in the tensile direction of the seat belt strap (101).

9. The belt retractor (100) according to one of the preceding claims, **characterised in that** between the parts (5, 6, 7) which are movable with respect to each other a spring (22) is provided, which is dimensioned such that the parts (5, 6, 7) are preloaded in the engagement region by the spring (22) with a spring force (FF) which, multiplied by the distance (D) to the axis of rotation of the belt shaft (1), results in a greater exerted torque than that resulting from the product of the tensile force (FG) exerted on the seatbelt strap (101) with the distance (L1, L2) to the bearing of the belt shaft (1).

10. The belt retractor (100) according to one of the preceding claims, **characterised in that** the force-limiting device (4) is attachable to the belt retractor (100) as a preassembled subassembly.

11. The belt retractor (100) according to one of the preceding claims, **characterised in that** the force-limiting device (4) includes a first and a second opening (25, 26), using which the force-limiting device (4) is respectively rotatably supportable on one part (1 a, 1 b) of the belt shaft (1).

12. The belt retractor (100) according to claim 11, **characterised in that** the openings (25, 26) are formed circular and disposed concentric to each other.

13. The belt retractor (100) according to one of the preceding claims, **characterised in that** the parts (5, 6, 7) movable with respect to one another of the force-limiting device (4) are formed by two discs forming a fixed unit and enclosing a cavity (27) between them, and a third disc disposed in the cavity (27) and movable with respect to the first two discs.

14. The belt retractor (100) according to claim 13, **characterised in that** the cavity (27) is formed by a first disc being provided on its outer edge with one or more axially-oriented attachments (9), and a second disc is provided with one or more radial extensions (10), using which the second disc is attached for conjoint rotation to the first disc on the axially oriented attachments (9) in a parallel and space manner with respect to the first disc.

15. The belt retractor (100) according to one of the preceding claims, **characterised in that** a part (1 a) of the belt shaft (1) engages with an extension (23) into an opening (28) of the respective other part (1 b) of the belt shaft (1), and the extension (23) is dimensioned smaller than the opening (28), so that a gap is formed between the parts (1 a, 1 b) of the belt shaft (1) into which gap a part (6, 7) of the force limiting device (4) protrudes, which is attached for conjoint rotation to the extension (23).

## Revendications

1. Enrouleur de ceinture (100) comportant un appareil de limitation de la force (4) régulé par la vitesse pour permettre un déroulement dont la force est limitée d'une sangle de ceinture (101), comprenant
- un axe de ceinture (1) monté rotatif dans un cadre d'enrouleur (3),
- un dispositif de blocage destiné à bloquer l'axe de ceinture (1) en cas de dépassement d'une valeur prédéfinie de l'accélération du déroulement de la sangle de ceinture et/ou de la décélération du véhicule par rapport au cadre d'enrouleur (3) dans la direction de déroulement de la ceinture,
- au moins deux pièces (5, 6, 7) déplacées l'une par rapport à l'autre lors de l'activation de l'appareil de limitation de la force (4), l'une des pièces (5) effectuant un mouvement oscillatoire,
- les deux pièces (5, 6, 7) comportant des dentures (11, 12, 13, 14) avec lesquelles elles viennent en prise et dont elles se dégagent en alternance pendant le mouvement relatif,
- l'axe de ceinture (1) étant réalisé au moins en deux parties avec une première et une seconde partie (1 a, 1 b),
- la sangle de ceinture (101) pouvant être enroulée sur la première partie (1a), et la seconde partie (1b) de l'axe de ceinture (1) pouvant être bloquée par rapport au cadre d'enrouleur (3) lors d'un actionnement du dispositif de blocage, et
- que les pièces (5, 6, 7) déplaçables les unes par rapport aux autres sont associées respectivement à des parties différentes (1a, 1b) de l'axe de ceinture (1), **caractérisé en ce que**
- le cadre d'enrouleur (3) est réalisé en forme de U avec deux branches (3a, 3b) opposées l'une à l'autre, et l'appareil de limitation de la force est disposé entre les branches (3a, 3b).

2. Enrouleur de ceinture selon la revendication 1, **caractérisé en ce qu'**au moins l'une des dentures (14) est disposée sur l'une des branches (3a, 3b).

3. Enrouleur de ceinture selon la revendication 2, **caractérisé en ce que** la denture (14) est disposée sur une pièce séparée, qui est enfoncée ou collée dans la branche (3a), ou elle est frittée en tant que pièce séparée et collée sur la branche (3a) avec complémentarité de formes.

4. Enrouleur de ceinture selon la revendication 2, **caractérisé en ce que** la denture (14) est formée par un estampage sur la branche (3a).

5. Enrouleur de ceinture selon la revendication 2, **caractérisé en ce que** la denture (14) est formée par des évidements disposés à équidistance.

6. Enrouleur de ceinture (100) selon l'une des revendications précédentes, **caractérisé en ce que** l'appareil de limitation de la force (4) est réalisé de forme annulaire avec une ouverture centrale (25) et est disposé de manière coaxiale par rapport aux deux parties (1 a, 1 b) de l'axe de ceinture (1).

7. Enrouleur de ceinture (100) selon l'une des revendications précédentes, **caractérisé en ce que** les deux parties (1 a, 1 b) de l'axe de ceinture (1) se chevauchent sur certaines sections dans la direction de l'axe de rotation de l'axe de ceinture (1), et l'appareil de limitation de la force (4) est disposé dans une section définie par le chevauchement des deux parties (1 a, 1 b).

8. Enrouleur de ceinture (100) selon l'une des revendications précédentes, **caractérisé en ce que** les deux parties (1 a, 1 b) de l'axe de ceinture (1) se chevauchent sur certaines sections dans la direction de l'axe de rotation de l'axe de ceinture (1), et **en ce qu'**une pièce (6) de l'appareil de limitation de la force (4) dépasse avec une section dans un espace libre créé entre les sections se chevauchant des parties (1 a, 1 b), et est disposée dans la zone du chevauchement solidaire en rotation sur l'une des parties (1 a, 1 b) de l'axe de ceinture (1) dans le sens de traction de la sangle de ceinture (101).

9. Enrouleur de ceinture (100) selon l'une des revendications précédentes, **caractérisé en ce qu'**entre les pièces (5, 6, 7) déplaçables les unes par rapport aux autres se trouve un ressort (22), qui est dimensionné de telle manière que les pièces (5, 6, 7) sont précontraintes par le ressort (22) dans la zone de prise avec une force de ressort (FF) qui, multipliée par la distance (D) par rapport à l'axe de rotation de l'axe de ceinture (1), exerce un couple plus élevé que la force de traction (FG) résultante exercée par le biais de la sangle de ceinture (101) multipliée par la distance (L1, L2) par rapport au logement de l'axe de ceinture (1).

10. Enrouleur de ceinture (100) selon l'une des revendications précédentes, **caractérisé en ce que** l'appareil de limitation de la force (4) peut être fixé sur l'enrouleur de ceinture (100) en tant que module prémonté.

11. Enrouleur de ceinture (100) selon l'une des revendications précédentes, **caractérisé en ce que** l'appareil de limitation de la force (4) comporte une première et une seconde ouverture (25, 26), avec lesquelles l'appareil de limitation de la force (4) peut être fixé solidaire en rotation respectivement sur une partie (1a, 1 b) de l'axe de ceinture (1).

12. Enrouleur de ceinture (100) selon la revendication 11, **caractérisé en ce que** les ouvertures (25, 26) sont réalisées de forme circulaire et disposées de manière concentrique l'une par rapport à l'autre.

13. Enrouleur de ceinture (100) selon l'une des revendications précédentes, **caractérisé en ce que** les pièces (5, 6, 7) déplaçables les unes par rapport aux autres de l'appareil de limitation de la force (4) sont formées par deux disques formant une unité fixe et enfermant une cavité (27) entre eux et un troisième disque disposé dans la cavité (27) et déplaçable par rapport aux deux premiers disques.

14. Enrouleur de ceinture (100) selon la revendication 13, **caractérisé en ce que** la cavité (27) est formée en dotant un premier disque sur son bord extérieur d'une ou de plusieurs saillies (9) orientées axialement, et en dotant un deuxième disque d'un ou de plusieurs prolongements (10) radiaux, avec lesquels il est fixé solidaire en rotation sur les saillies (9) orientées axialement, dans une disposition parallèle et espacée par rapport au premier disque.

15. Enrouleur de ceinture (100) selon l'une des revendications précédentes, **caractérisé en ce qu'**une partie (1a) de l'axe de ceinture (1) vient avec un prolongement (23) en prise dans un évidement (28) de l'autre partie (1b) respective de l'axe de ceinture (1), et le prolongement (23) est dimensionné plus petit que l'évidement (28), de sorte qu'une fente est formée entre les parties (1 a, 1 b) de l'axe de ceinture (1), dans laquelle une pièce (6, 7) de l'appareil de limitation de la force (4) dépasse, qui est fixée solidaire en rotation sur le prolongement (23).
